# EUROPÄISCHE PATENTSCHRIFT

(11) **EP 2 684 728 B1**
(45) Veröffentlichungstag und Bekanntmachung des Hinweises auf die Patenterteilung: **18.01.2017**
(21) Anmeldenummer: 13002872.3
(22) Anmeldetag: 04.06.2013
(51) Int. Cl.: B60K 25/00, B60K 25/02, B60W 20/40

(54) **KRAFTFAHRZEUG MIT VON EINEM ELEKTROMOTOR ANGETRIEBENEN NEBENAGGREGATEN**
MOTOR VEHICLE WITH AUXILIARY UNITS DRIVEN BY AN ELECTRIC MOTOR
VÉHICULE AUTOMOBILE DOTÉ DE MODULES AUXILIAIRES ENTRAÎNÉS PAR UN MOTEUR ÉLECTRIQUE

(30) Priorität: 14.07.2012 DE 102012014020
(43) Veröffentlichungstag der Anmeldung: 15.01.2014
(73) Patentinhaber: WABCO GmbH, 30453 Hannover (DE)
(72) Erfinder: Dirk, Bernhardt, 31515 Wunstorf (DE)

(56) Entgegenhaltungen:
- EP-A1- 2 025 538
- DE-A1-102008 021 976
- US-A1- 2012 043 145

## Beschreibung

Die Erfindung betrifft ein Kraftfahrzeug mit einer Brennkraftmaschine zum Antrieb des Fahrzeugs, mit wenigstens zwei Nebenaggregaten und mit einer Elektromaschine, die mit einer Stromquelle verbunden ist und mittels einer Kupplungseinrichtung wahlweise mit Nebenaggregaten kuppelbar ist, sowie mit einer Steuereinrichtung zum Ansteuern der Kupplungseinrichtung zum Kuppeln der Nebenaggregate mit der Elektromaschine nach vorgegebenen Prioritäten.

Ein derartiges Kraftfahrzeug ist aus der DE 10 2008 021 976 A1 bekannt. Die Elektromaschine steht wenigstens zeitweise über einen Riementrieb mit den Nebenaggregaten in Antriebsverbindung, um diese wahlweise anzutreiben. Das Kraftfahrzeug weist eine erste Kupplungseinrichtung auf, mittels der die Brennkraftmaschine rotatorisch mit der Elektromaschine kuppelbar ist. Dadurch wird wenigstens ein zeitweiser mechanischer Antrieb der Elektromaschine durch die Brennkraftmaschine ermöglicht. Die Elektromaschine ist im Wesentlichen parallel zu den ebenfalls parallel zueinander angeordneten Nebenaggregaten angeordnet und steht über einen Riementrieb sowie jeweils einer Kupplung für jedes Nebenaggregat mit diesen wahlweise in Antriebsverbindung. Den Nebenaggregaten werden entsprechend ihrer Wichtigkeit Prioritäten zugeordnet. So ist beispielsweise eine Lenkhilfepumpe zur Lenkunterstützung mit einer hohen Priorität versehen. Ein Druckluftkompressor kann aufgrund des Druckluftspeichers der Lenkhilfepumpe zeitweise nachgeordnet werden. So lassen sich auch weitere Nebenaggregate in Abhängigkeit vom Fahrzeugzustand mit unterschiedlichen, gegebenenfalls auch zustandsabhängig wechselnden Prioritäten betreiben. Die Einstufung dieser Prioritäten kann dabei von der Steuereinrichtung vorgenommen werden. Die räumliche Anordnung der Nebenaggregate bedingt getrennte Kupplungen für jedes Nebenaggregat, was zu einem erhöhten Bauaufwand führt. Die Leistung der Elektromaschine ist daran angepasst, mehrere Nebenaggregate über Kupplungen und Riementriebe oder Zahntriebe anzutreiben. Um während der Anfahrphasen der Brennkraftmaschine eine verringerte Leistungsabgabe an die Nebenaggregate zu erreichen, sind die Prioritäten zum Antreiben der Nebenaggregate in der Weise gesetzt, dass beispielsweise eine Lenkhilfepumpe zur Lenkunterstützung mit einer hohen Priorität versehen ist, während ein Druckluftkompressor der Lenkhilfepumpe zeitweise nachgeordnet sein kann.

Vor diesem Hintergrund liegen der Erfindung die Aufgaben zugrunde, den Antrieb von wenigstens zwei Nebenaggregaten durch eine Elektromaschine konstruktiv zu vereinfachen sowie die Elektromaschine beim Kuppeln mit den Nebenaggregaten nicht zu überlasten.

Die Lösung dieser Aufgabe ergibt sich durch die Merkmale des Anspruchs 1. Vorteilhafte Weiterbildungen sind in den Unteransprüchen definiert.

Die Erfindung geht demnach aus von einem Kraftfahrzeug mit einer Brennkraftmaschine zum Antrieb des Fahrzeugs, mit wenigstens zwei Nebenaggregaten und mit einer Elektromaschine, die mit einer Stromquelle verbunden ist und mittels einer Kupplungseinrichtung wahlweise mit den Nebenaggregaten kuppelbar ist, sowie mit einer Steuereinrichtung zum Ansteuern der Kupplungseinrichtung zum Kuppeln der Nebenaggregate mit der Elektromaschine nach vorgegebenen Prioritäten. Hierbei ist vorgesehen, dass die Kupplungseinrichtung als Doppelkupplung ausgebildet ist, und dass mittels der Doppelkupplung zwei Nebenaggregate mit der Elektromaschine kuppelbar sind, wobei jeweils das eine oder das andere Nebenaggregat oder beide Nebenaggregate oder kein Nebenaggregat mit der Elektromaschine kuppelbar ist.

Die Nutzung einer Doppelkupplung ermöglicht es, zwei Nebenaggregate Bauraum und Kosten sparend mit der Elektromaschine wahlweise zu kuppeln. Es ist demnach jeweils nur eine motorisch betreibbare Elektromaschine sowie deren Steuergerät für je zwei Nebenaggregate erforderlich, und die Ansteuerung einer Doppelkupplung erfordert vorteilhaft nur eine vereinfachte Steuereinrichtung. Gemäß einem prägenden Charakter der Doppelkupplung weist diese eine gemeinsame Eingangsseite und zwei Ausgangsseiten auf. Sie kann aber auch so genutzt werden, dass sie zwei Eingangsseiten und eine gemeinsame Ausgangsseite aufweist. Eingangsseitig ist die Doppelkupplung antreibbar, während sie selbst ausgangsseitig angeschlossene Wellen antreiben kann.

Vorzugsweise ist die Elektromaschine als Scheibenmotor mit einer Rotorscheibe und einem diese umfassenden Stator ausgebildet, und je eine Kupplung der Doppelkupplung ist auf jeder axialen Seite der Rotorscheibe sowie mit dieser zusammenwirkend angeordnet. Abweichend davon kann eine Bauform vorgesehen sein, bei der die beiden Kupplungen der Doppelkupplung radial übereinander angeordnet sind, wobei die radial innere Kupplung ausgangsseitig mit einer zentralen Welle sowie die radial äußere Kupplung ausgangsseitig mit einer die zentrale Welle konzentrisch in sich aufnehmende Hohlwelle verbindbar ist, und bei der die beiden Nebenaggregate auf nur einer Seite der Elektromaschine bzw. der Doppelkupplung angeordnet sind.

Die Doppelkupplung gewährleistet bei beiden Bauformen eine voneinander unabhängige An- und Abkopplung der beiden Nebenaggregate an die nur eine Elektromaschine sowie eine Einsparung von Bauteilen und Bauraum sowie eine Reduzierung der Komplexität, und führt dadurch zu einer Verminderung der Herstellkosten.

Im Detail kann vorgesehen sein, dass die auf jeder Seite der Rotorscheibe angeordneten Kupplungsteile der Doppelkupplung als Druckplatte und als eine auf jeweils einer Halbwelle befestigte Kupplungsscheibe ausgebildet sind, und dass die beiden Halbwellen mittels Antriebsverbindungen mit den zugeordneten Nebenaggregaten antriebsverbunden sind.

Weiter kann vorgesehen sein, dass die beiden Halbwellen axial voneinander beabstandet sind, dass koaxial innerhalb der beiden Halbwellen eine Rotorwelle angeordnet ist, dass die Rotorscheibe mit der Rotorwelle verbunden sowie axial zwischen den beiden Halbwellen angeordnet ist, und dass die Rotorwelle mittels einer ersten schaltbaren Kupplung mit der Brennkraftmaschine oder mittels einer zweiten schaltbaren Kupplung mit einem der Brennkraftmaschine antriebstechnisch nachgeordneten Getriebeabtrieb kuppelbar ist. Insbesondere durch die mittels der beiden Kupplungen der Doppelkupplung mögliche Verbindung der zentralen Rotorwelle mit der Brennkraftmaschine bzw. mit dem Getriebeabtrieb lassen sich die beiden Nebenaggregate auch verbrennungsmotorisch oder durch den Fahrzeugradabtrieb antreiben.

Durch das Schließen der ersten Kupplung kann ein Kraftfluss direkt von der Brennkraftmaschine auf die Elektromaschine geleitet werden, so dass diese Elektromaschine generatorisch betrieben zusätzlich zur Stromerzeugung im Fahrzeugbordnetz beitragen kann, sofern ein Antrieb der dann abgekoppelten Nebenaggregate gerade nicht notwendig ist. Bei einer ausreichend starken Auslegung der Elektromaschine kann diese im motorischen Betrieb auch zum Starten der Brennkraftmaschine dienen. Bei einem Kraftfluss von dem Getriebeabtrieb zur Elektromaschine kann diese im generatorischen Rekuperationsbetrieb elektrische Energie erzeugen und ins Fahrzeugbordnetz einspeisen.

Unabhängig von einer Verbindung der Elektromaschine zur Brennkraftmaschine oder zum Getriebeausgang ist der Rekuperationsbetrieb auch dann möglich, wenn die Elektromaschine von einem der Nebenaggregate mechanisch angetrieben wird. Dies kann beispielsweise dann der Fall sein, wenn mittels der Elektromaschine ein Druckluftkompressor elektromotorisch antreibbar ist, welcher von diesem erzeugte Druckluft in einen Druckluftspeicher leitet. Sofern in diesem Druckluftspeicher für eine aktuelle Betriebssituation zuviel Druckluft vorhanden ist und diese auch in naher Zukunft voraussichtlich nicht gebraucht werden wird, also beispielsweise etwa nach dem Abstellen des Fahrzeugs auf einem Betriebshof, Entfernen des Zündschlüssels und Abwarten einer Wartezeit, dann kann diese Druckluft aus dem Druckluftspeicher in Richtung zum Kompressor abgelassen werden, so dass dessen Antriebswelle in Bewegung versetzt wird. Dadurch treibt der Druckluftkompressor dann die Elektromaschine mechanisch an, so dass diese in ihren generatorischen Betrieb geschaltet Strom in das Fahrzeugbordnetz bzw. in dessen Batterie einspeisen kann.

Durch die vorgeschlagene Anordnung des Antriebs der beiden Nebenaggregate lässt sich die Leistung dieser Elektromaschine so bemessen, dass sie der Summe entspricht, die aus dem Maximalwert des Leistungsbedarfs eines der beiden Nebenaggregate und der Dauerlast des anderen Nebenaggregats gebildet wird. Der Maximalwert des einen Nebenaggregats wird beispielsweise in einer Anlaufphase desselben erreicht. Hierdurch lässt sich die Leistung der Elektromaschine auf etwa drei Viertel derjenigen Leistung begrenzen, die erforderlich wäre, wenn zwei Nebenaggregate im ungünstigsten Fall einer Anlaufphase gleichzeitig vom Elektromotor angetrieben werden. Begünstigt wird das Anlaufen des dann nachfolgend angekoppelten Nebenaggregates durch die rotierende Masse der elektrischen Maschine und der Masse des voran angekoppelten Nebenaggregats. Dementsprechend kann die Elektromaschine kleiner, leichter und somit kostengünstiger dimensioniert sein.

Die Steuereinrichtung kann vorzugsweise eine Vorrangschaltung umfassen, die dazu eingerichtet ist zu verhindern, dass beide Nebenaggregate gleichzeitig mittels der Doppelkupplung mit der Elektromaschine gekuppelt werden. Dabei kann die Vorrangschaltung beispielsweise dazu eingerichtet sein kann, dass dasjenige Nebenaggregat zuerst mittels der Doppelkupplung mit dem Elektromotor gekuppelt wird, das sich im ungünstigsten Zustand einer Anlaufphase befindet. Die Vorrangschaltung in der Steuereinrichtung kann aber auch dazu eingerichtet sein, dass dasjenige Nebenaggregat mittels der Doppelkupplung zuerst mit der Elektromaschine gekuppelt wird, welches in einer aktuellen Betriebssituation für einen störungsfreien Betrieb gerade die höchste Nutzungspriorität aufweist, also am dringendsten benötigt wird. Mögliche Betriebssituationen können beispielsweise ein Fahren des Fahrzeugs auf einem Betriebshof, an einer Steigung oder einem Gefälle sein.

Je eine Elektromaschine kann mit jeweils zwei Nebenaggregaten kuppelbar sein, die aus der Gruppe Druckluftkompressor, Klimakompressor, Hydraulikpumpe für die Lenkung und andere bewegliche Einrichtungen, Lüfter, Motorölpumpe, Getriebeölpumpe, Wasserpumpe und dergleichen ausgewählt sind. Es ist aber auch möglich, mit jeweils einer Kupplung der Doppelkupplung mehrere Nebenaggregate an die Elektromaschine anzukuppeln, sofern diese Nebenaggregate mit der Abtriebsseite einer Kupplung der Doppelkupplung bzw. mit deren Halbwelle antriebsverbunden sind. Zu beachten ist bei dieser Ausführungsform jedoch, dass diese Mehrzahl von Nebenaggregaten je Kupplung der Doppelkupplung gleichzeitig mit der Elektromaschine verbunden oder von dieser getrennt werden.

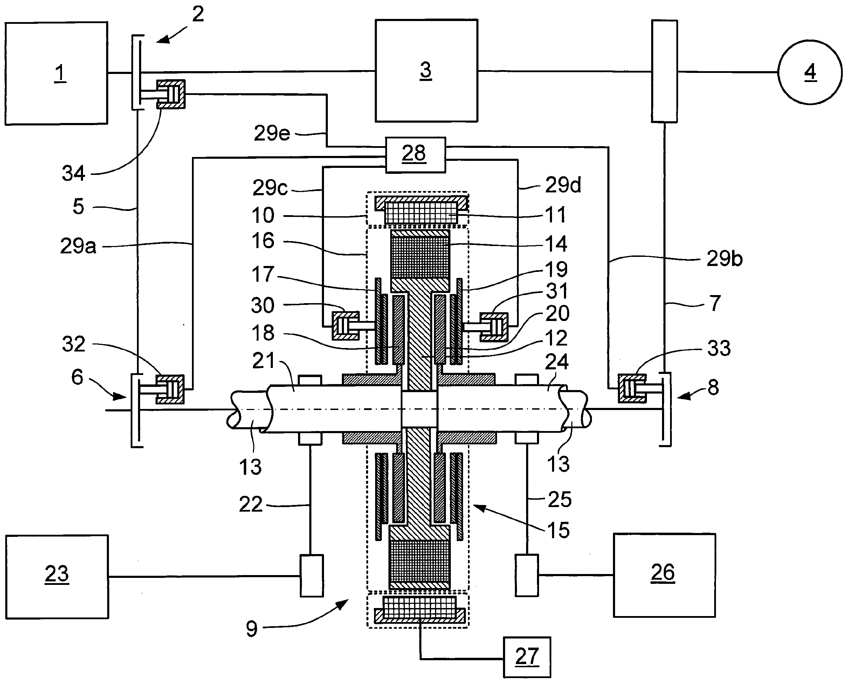

Die Erfindung wird nachstehend anhand eines in der beigefügten einzigen Zeichnungsfigur dargestellten Ausführungsbeispiels weiter erläutert.

Von einem Kraftfahrzeug ist ein Antriebsstrang schematisch dargestellt, der eine Brennkraftmaschine 1 aufweist, die über eine Anfahrkupplung 2 und ein Getriebe 3 mit einem Radantrieb 4 verbunden ist. Die Anfahrkupplung 2 ist mittels eines zugeordneten Stellglieds 34 betätigbar, das über eine fünfte Steuerleitung 29e mit einer Steuereinrichtung 28 verbunden ist. Das Stellglied 34 ist als hydraulisch oder pneumatisch betätigbare Kolben-Zylinder-Anordnung ausgebildet.

Die Brennkraftmaschine 1 ist mittels einer ersten Antriebsverbindung 5, beispielsweise in Form eines Riementriebes, mit dem Eingangsteil einer ersten Kupplung 6 antriebstechnisch verbunden. Diese erste Kupplung 6 ist mit ihrer Ausgangsseite mit einer Rotorwelle 13 einer Elektromaschine 9 in Form eines Scheibenmotors kuppelbar. Eine zweite Antriebsverbindung 7, beispielsweise in Form eines Riementriebs, verbindet den Ausgang des Getriebes 3 mit dem Eingangsteil einer zweiten Kupplung 8, die ebenfalls mit der Rotorwelle 13 kuppelbar ist. In dem hier gewählten Ausführungsbeispiel sind die beiden Kupplungen 6 und 8 mittels zugeordneter dritter und vierter Aktuatoren 32, 33 betätigbar, die über eine erste bzw. eine zweite Steuerleitung 29a, 29b mit der Steuerungseinrichtung 28 verbunden sind. Die beiden Aktuatoren 32 und 33 sind als hydraulisch oder pneumatisch betätigbare Kolben-Zylinder-Anordnungen ausgebildet.

Die Elektromaschine 9 ist wechselweise entweder als Generator oder als Motor betreibbar. Sie ist mit einer Stromquelle 27 verbunden und weist einen Stator 10 mit einem Dauermagneten oder Elektromagneten 11 sowie eine Rotorscheibe 12 auf, wobei die Rotorscheibe 12 radial außen einen Elektromagneten oder Dauermagneten 14 trägt.

Radial innerhalb des Elektromagneten bzw. Dauermagneten 14 ist an der Rotorscheibe 12 eine Doppelkupplung 15 angeordnet, die im Normalbetrieb eine antreibbare Eingangsseite (Rotorwelle 13) sowie zwei angetriebene Ausgangsseiten (Halbwellen 21 und 24) aufweist. Die Doppelkupplung 15 weist hierzu auf einer axialen Seite der Rotorscheibe 12 eine erste Druckplatte 17 und eine erste Kupplungsscheibe 18 mit Reibbelag und auf der anderen axialen Seite der Rotorscheibe 12 eine zweite Druckplatte 19 und eine zweite Kupplungsscheibe 20 mit Reibbelag auf. Die erste Kupplungsscheibe 18 ist mit einer ersten hohlen Halbwelle 21 fest verbunden und mit dieser koaxial sowie drehbar auf der Rotorwelle 13 angeordnet. Die zweite Kupplungsscheibe 20 ist mit einer zweiten hohlen Halbwelle 24 fest verbunden und ebenfalls koaxial sowie drehbar auf der Rotorwelle 13 angeordnet. Die erste Druckplatte 17 der Doppelkupplung 15 ist mittels eines ersten Aktuators 30 axial in Richtung zur ersten Kupplungsscheibe 18 verschiebbar, der über eine dritte Steuerleitung 29c mit der Steuereinrichtung 28 verbunden ist. Die zweite Druckplatte 19 der Doppelkupplung 15 ist mittels eines zweiten Aktuators 31 axial in Richtung zur zweiten Kupplungsscheibe 20 verschiebbar, der über eine vierte Steuerleitung 29d mit der Steuereinrichtung 28 verbunden ist. In dem hier gewählten Ausführungsbeispiel sind die beiden genannten Aktuatoren 30, 31 als hydraulisch oder pneumatisch betätigbare Kolben-Zylinder-Anordnungen ausgebildet.

Die beiden Halbwellen 21, 24 sind mit axialem Abstand zueinander auf der Rotorwelle 13 drehbar angeordnet und nehmen zwischen sich die mit der Rotorwelle 13 fest verbundene Rotorscheibe 12 auf.

Die erste Halbwelle 21 ist über eine dritte Antriebsverbindung 22, beispielsweise in Form eines Riementriebs, mit einem ersten Nebenaggregat 23, beispielsweise einem Druckluftkompressor, verbunden, während die zweite Halbwelle 24 über eine vierte Antriebsverbindung 25, beispielsweise in Form eines Riementriebs, mit dem zweiten Nebenaggregat 26, beispielsweise einem Klimakompressor, verbunden ist.

Mittels der Steuereinrichtung 28 lassen sich die beiden Kupplungen der Doppelkupplung 15 wahlweise entweder mit dem ersten Nebenaggregat 23 oder dem zweiten Nebenaggregat 26 oder mit beiden Nebenaggregaten 23, 26 gleichzeitig kuppeln, oder die beiden Kupplungen der Doppelkupplung 15 unterbrechen die Antriebsverbindung zu den beiden Nebenaggregaten 23, 26, so dass keines der Nebenaggregate 23, 26 durch die Elektromaschine 9 angetrieben wird.

Die erste Antriebsverbindung 5 zwischen der Brennkraftmaschine 1 und der Rotorwelle 13 über die erste Kupplung 6 und die zweite Antriebsverbindung 7 zwischen dem Getriebe 3 und der zweiten Kupplung 8 zur Rotorwelle 13 lässt sich wie bereits erwähnt ebenfalls mittels der Steuereinrichtung 28 steuern, so dass die Rotorwelle 13 und damit die Elektromaschine 9 wahlweise durch die Brennkraftmaschine 1 oder durch das mit dem Radantrieb 4 gekoppelte Getriebe 3 antreibbar ist, um beispielsweise im Schiebe- oder Bremsbetrieb Energie der elektrische Stromquelle 27 zuzuführen, wenn die Elektromaschine 9 auf Generatorbetrieb umgeschaltet ist.

Die Rotorscheibe 12 ist bei dem in der Zeichnungsfigur dargestellten und gerade beschriebenen Ausführungsbeispiel drehfest mit der Rotorwelle 13 verbunden. Es ist aber auch möglich, die Rotorwelle 13 als feststehende Achse auszubilden (also gehäusefest anzuordnen), auf der die Rotorscheibe 12 dann drehbar gelagert angeordnet ist. Bei dieser Ausführungsform wäre eine Antriebsverbindung der Nebenaggregate 23, 26 mit der Brennkraftmaschine 1 bzw. mit dem Getriebeabtrieb nicht möglich. Die erste und die zweite Kupplung 6, 8 sowie die erste und die zweite Antriebsverbindung 5, 7 wären dann nicht vorhanden.

Neben den Vorteilen der Einsparung eines gesonderten Antriebsmotors für zumindest ein Nebenaggregat verändern sich auch die Randbedingungen für die Auslegung des Antriebs der beiden Nebenaggregate 23, 26. Zwei Nebenaggregate 23, 26, beispielsweise ein Druckluftkompressor und eine Lenkhilfepumpe, benötigen jeweils beispielsweise eine maximale Antriebsleistung von je 5 kW, die der Maximalanforderung im ungünstigsten Fall bei einer Anlaufphase des Kompressors und der Lenkhilfepumpe bei einer Umgebungstemperatur von -40° C sowie einem hohen Gegendruck entspricht. Das heißt, dass die Elektromaschine 9 für den gleichzeitigen Anlauf des Kompressors und der Lenkhilfepumpe eine Leistung von 10 kW (= 100%) aufweisen müsste. Mit der erfindungsgemäßen Anordnung einer Doppelkupplung 15 am Elektromotor 9 ist es möglich, durch Einführung einer Vorrangschaltung, die verhindert, dass beide Nebenaggregate 23 und 26 gleichzeitig anlaufen, die erforderliche Leistung der Elektromaschine 9 auf etwa 7,5 kW zu vermindern, sofern angenommen wird, dass eines der beiden Nebenaggregate 23 oder 26 bereits mit einer Dauerlast von 2,5 kW läuft und ein weiteres Nebenaggregat 26 oder 23 mit einer maximalen Leistungsanforderung zugeschaltet wird. Unter Berücksichtigung der Schwungmasse der als Scheibenmotors ausgebildeten Elektromaschine 9 und des sich drehenden Nebenaggregats lässt sich die erforderliche Leistung voraussichtlich um 30% auf 7 kW oder weniger vermindern, was zu Einsparungen bei den Herstellkosten, dem erforderlichen Bauraum und der Komplexität führt.

Je eine Elektromaschine 9 kann mit jeweils zwei Nebenaggregaten 23, 26 kuppelbar sein, die aus der Gruppe Druckluftkompressor, Klimakompressor, Hydraulikpumpe für Lenkung oder andere bewegliche Einrichtungen, Lüfter, Motorölpumpe, Getriebeölpumpe, Wasserpumpe und dergleichen ausgewählt sind. Es ist aber auch möglich, mit jeweils einer Kupplung der Doppelkupplung mehrere Nebenaggregate gleichzeitig an die Elektromaschine anzukuppeln, wie bereits weiter vorne erläutert wurde.

Alle in der vorgenannten Figurenbeschreibung, in den Ansprüchen und in der Beschreibungseinleitung genannten Merkmale sind sowohl einzeln als auch in beliebiger Kombination miteinander einsetzbar. Die Erfindung ist somit nicht auf die beschriebenen und beanspruchten Merkmalskombinationen beschränkt. Vielmehr sind alle Merkmalskombinationen als offenbart zu betrachten.

### Bezugszeichenliste (Bestandteil der Beschreibung)

- 1: Brennkraftmaschine
- 2: Anfahrkupplung
- 3: Getriebe
- 4: Radantrieb
- 5: Erste Antriebsverbindung
- 6: Erste Kupplung
- 7: Zweite Antriebsverbindung
- 8: Zweite Kupplung
- 9: Elektromaschine
- 10: Stator
- 11: Magnet oder Spule am Stator
- 12: Rotorscheibe
- 13: Rotorwelle
- 14: Spule oder Magnet am Rotor
- 15: Doppelkupplung
- 16: Rotor
- 17: Erste Druckplatte
- 18: Erste Kupplungsscheibe mit Reibbelag
- 19: Zweite Druckplatte
- 20: Zweite Kupplungsscheibe mit Reibbelag
- 21: Erste Halbwelle
- 22: Dritte Antriebsverbindung
- 23: Erstes Nebenaggregat
- 24: Zweite Halbwelle
- 25: Vierte Antriebsverbindung
- 26: Zweites Nebenaggregat
- 27: Stromquelle
- 28: Steuereinrichtung
- 29a: Erste Steuerleitung
- 29b: Zweite Steuerleitung
- 29c: Dritte Steuerleitung
- 29d: Vierte Steuerleitung
- 29e: Fünfte Steuerleitung
- 29f: Sechste Steuerleitung
- 30: Erster Aktuator
- 31: Zweiter Aktuator
- 32: Dritter Aktuator
- 33: Vierter Aktuator
- 34: Stellglied an der Anfahrkupplung

## Patentansprüche

1. Kraftfahrzeug mit einer Brennkraftmaschine (1) zum Antrieb des Fahrzeugs, mit wenigstens zwei Nebenaggregaten (23; 26) und mit einer Elektromaschine (9), die mit einer Stromquelle (27) verbunden ist und mittels einer Kupplungseinrichtung wahlweise mit Nebenaggregaten (23; 26) kuppelbar ist, sowie mit einer Steuereinrichtung (28) zum Ansteuern der Kupplungseinrichtung zum Kuppeln der Nebenaggregate (23; 26) mit der Elektromaschine (9) nach vorgegebenen Prioritäten, **dadurch gekennzeichnet, dass** die Kupplungseinrichtung als Doppelkupplung (15) ausgebildet ist, und dass mittels der Doppelkupplung (15) zwei Nebenaggregate (23; 26) mit der Elektromaschine (9) kuppelbar sind, wobei jeweils das eine oder das andere Nebenaggregat (23; 26) oder beide Nebenaggregate (23; 26) oder kein Nebenaggregat (23; 26) mit der Elektromaschine (9) kuppelbar ist.

2. Kraftfahrzeug nach Anspruch 1, **dadurch gekennzeichnet, dass** die Elektromaschine (9) als Scheibenmotor mit einer Rotorscheibe (12) und einem diese umfassenden Stator (10) ausgebildet ist, und dass je eine Kupplung (17, 18; 19, 20) der Doppelkupplung (15) auf jeder Seite der Rotorscheibe (12) angeordnet ist und mit dieser zusammenwirkt.

3. Kraftfahrzeug nach Anspruch 2, **dadurch gekennzeichnet, dass** die auf jeder Seite der Rotorscheibe (12) angeordneten Kupplungsteile (17, 18; 19, 20) als Druckplatte (17; 19) und als eine auf jeweils einer Halbwelle (21; 24) befestigte Kupplungsscheibe (18; 20) ausgebildet sind, und dass die beiden Halbwellen (21; 24) mittels Antriebsverbindungen (22; 25) mit den zugeordneten Nebenaggregaten (23; 26) antriebsverbunden sind.

4. Kraftfahrzeug nach Anspruch 3, **dadurch gekennzeichnet, dass** die beiden Halbwellen (21; 24) axial voneinander beabstandet sind, und dass koaxial innerhalb der beiden Halbwellen (21; 24) eine Rotorwelle (13) angeordnet ist.

5. Kraftfahrzeug nach Anspruch 4, **dadurch gekennzeichnet, dass** die Rotorscheibe (12) mit der Rotorwelle (13) verbunden sowie axial zwischen den beiden Halbwellen (21; 24) angeordnet ist.

6. Kraftfahrzeug nach Anspruch 1, **dadurch gekennzeichnet, dass** die beiden Kupplungen der Doppelkupplung radial übereinander angeordnet sind, wobei die radial innere Kupplung ausgangsseitig mit einer zentralen Welle und die radial äußere Kupplung ausgangsseitig mit einer die zentrale Welle konzentrisch in sich aufnehmende Hohlwelle verbindbar ist, und bei dem die beiden Nebenaggregate 23, 26 auf nur einer Seite der Elektromaschine 9 angeordnet sind.

7. Kraftfahrzeug nach einem der Ansprüche 4 oder 5, **dadurch gekennzeichnet, dass** die Rotorwelle (13) mittels einer ersten schaltbaren Kupplung (6) mit der Brennkraftmaschine (1) oder mittels einer zweiten schaltbaren Kupplung (8) mit einem der Brennkraftmaschine (1) antriebstechnisch nachgeordneten Getriebeabtrieb kuppelbar ist.

8. Kraftfahrzeug nach einem der Ansprüche 1 bis 7, **dadurch gekennzeichnet, dass** die Leistung der Elektromaschine (9) so bemessen ist, dass sie der Summe entspricht, die aus dem Maximalwert des Leistungsbedarfs eines der beiden Nebenaggregate (23; 26) und der Dauerlast des anderen Nebenaggregats (23; 26) gebildet wird.

9. Kraftfahrzeug nach einem der Ansprüche 1 bis 8, **dadurch gekennzeichnet, dass** die Steuereinrichtung (28) eine Vorrangschaltung umfasst, die dazu eingerichtet ist zu verhindern, dass beide Nebenaggregate (23; 26) gleichzeitig mittels der Doppelkupplung (15) mit der Elektromaschine (9) gekuppelt werden.

10. Kraftfahrzeug nach Anspruch 9, **dadurch gekennzeichnet, dass** die Vorrangschaltung in der Steuereinrichtung (28) dazu eingerichtet ist, dasjenige Nebenaggregat (23; 26) zuerst mittels der Doppelkupplung (15) mit der Elektromaschine (9) zu kuppeln, das sich im ungünstigsten Zustand einer Anlaufphase befindet.

11. Kraftfahrzeug nach Anspruch 9, **dadurch gekennzeichnet, dass** die Vorrangschaltung in der Steuereinrichtung (28) dazu eingerichtet ist, dass dasjenige Nebenaggregat (23; 26) zuerst mittels der Doppelkupplung (15) mit der Elektromaschine (9) gekuppelt wird, welches in einer aktuellen Betriebssituation für einen störungsfreien Betrieb gerade die höchste Nutzungspriorität aufweist.

12. Kraftfahrzeug nach einem der Ansprüche 1 bis 11, **dadurch gekennzeichnet, dass** je eine Elektromaschine (9) mit jeweils zwei Nebenaggregaten (23; 26) kuppelbar ist, die aus der Gruppe Druckluftkompressor, Klimakompressor, Hydraulikpumpe, Wasserpumpe, Lüfter, Motorölpumpe und Getriebeölpumpe ausgewählt sind.

## Claims

1. Motor vehicle with an internal combustion engine (1) for driving the vehicle, with at least two auxiliary units (23; 26) and with an electric machine (9) which is connected to a power source (27) and can optionally be coupled to auxiliary units (23; 26) by means of a clutch device, and with a control device (28) for actuating the clutch device for coupling the auxiliary units (23; 26) to the electric machine (9) according to defined priorities, **characterized in that** the clutch device is formed as a dual clutch (15), and that two auxiliary units (23; 26) can be coupled to the electric machine (9) by means of the dual clutch (15), wherein in each case one or the other auxiliary unit (23; 26) or both auxiliary units (23; 26) or no auxiliary unit (23; 26) can be coupled to the electric machine (9).

2. Motor vehicle according to Claim 1, **characterized in that** the electric machine (9) is formed as a pancake motor with a rotor disk (12) and a stator (10) encompassing the latter, and in each case one clutch (17, 18; 19, 20) of the dual clutch (15) is arranged on each side of the rotor disk (12) and interacts therewith.

3. Motor vehicle according to Claim 2, **characterized in that** the clutch parts (17, 18; 19, 20), arranged on each side of the rotor disk (12), are formed as a pressure plate (17; 19) and as a clutch disk (18; 20) fastened on in each case a half-shaft (21; 24), and the two half-shafts (21; 24) are drive-connected to the assigned auxiliary units (23; 26) by means of drive connections (22; 25).

4. Motor vehicle according to Claim 3, **characterized in that** both half-shafts (21; 24) are axially spaced apart from one another, and a rotor shaft (13) is arranged coaxially within both the half-shafts (21; 24).

5. Motor vehicle according to Claim 4, **characterized in that** the rotor disk (12) is connected to the rotor shaft (13) and is arranged axially between the two half-shafts (21; 24).

6. Motor vehicle according to Claim 1, **characterized in that** both clutches of the dual clutch are arranged radially on top of one another, **characterized in that** the radially inner clutch can be connected on the output side to a central shaft and the radially outer clutch can be connected on the output side to a hollow shaft which concentrically receives the central shaft in it, and in the case of which both auxiliary units 23, 26 are arranged on only one side of electric machine 9.

7. Motor vehicle according to one of Claims 4 and 5, **characterized in that** the rotor shaft (13) can be coupled by means of a first shiftable clutch (6) to the internal combustion engine (1) or by means of a second shiftable clutch (8) to a transmission output which is arranged downstream of the internal combustion engine (1) in terms of drive.

8. Motor vehicle according to one of Claims 1 to 7, **characterized in that** the power of the electric machine (9) can be dimensioned such that it corresponds to the total which is formed from a maximum value of the power requirement of one of the two auxiliary units (23; 26) and the permanent load of the other auxiliary unit (23; 26).

9. Motor vehicle according to one of Claims 1 to 8, **characterized in that** the control device (28) comprises a priority circuit which is set up to prevent both auxiliary units (23; 26) being coupled simultaneously to the electric machine (9) by means of the dual clutch (15).

10. Motor vehicle according to Claim 9, **characterized in that** the priority circuit in the control device (28) is set up such that the auxiliary unit (23; 26) which is in the least expedient state of a starting phase is first coupled to the electric motor (9) by means of the dual clutch (15).

11. Motor vehicle according to Claim 9, **characterized in that** the priority circuit in the control device (28) is set up such that the auxiliary unit (23; 26), which in a current operating situation for fault-free operation at the time has the highest priority of use, is first coupled to the electric machine (9) by means of the dual clutch (15).

12. Motor vehicle according to one of Claims 1 to 11, **characterized in that** in each case an electric machine (9) can be coupled to in each case two auxiliary units (23; 26) which are selected from the group comprising air compressor, air-conditioning compressor, hydraulic pump, water pump, fan, motor oil pump and transmission oil pump.

## Revendications

1. Véhicule automobile présentant un moteur (1) à combustion interne pour l'entraînement du véhicule, au moins deux ensembles secondaires (23; 26) et une machine électrique (9) raccordée à une source (27) de courant et apte à être accouplée de manière sélective aux ensembles secondaires (23; 26) au moyen d'un dispositif d'embrayage, ainsi qu'un dispositif de commande (28) qui commande le dispositif d'embrayage pour accoupler les ensembles secondaires (23; 26) à la machine électrique (9) selon des priorités prédéterminées, **caractérisé en ce que** le dispositif d'embrayage est configuré comme embrayage double (15), **en ce que** deux ensembles secondaires (23; 26) peuvent être accouplés à la machine électrique (9) au moyen de l'embrayage double (15) et **en ce que** l'un ou l'autre des ensembles secondaires (23; 26), les deux ensembles secondaires (23; 26) ou aucun des ensembles secondaires (23; 26) peuvent être accouplés à la machine électrique (9).

2. Véhicule automobile selon la revendication 1, **caractérisé en ce que** la machine électrique (9) est configurée comme moteur à disque doté d'un disque de rotor (12) et d'un stator (10) qui entoure ce dernier et **en ce que** chaque embrayage (17, 18; 19, 20) de l'embrayage double (15) est disposé sur un côté respectif du disque (12) de rotor et coopère avec ce dernier.

3. Véhicule automobile selon la revendication 2, **caractérisé en ce que** les parties d'embrayage (17, 18; 19, 20) disposées de chaque côté du disque de rotor (12) sont configurées comme plaques de poussée (17; 19) et comme disques d'embrayage (18; 20) fixés fois sur un demi-arbre (21; 24) respectif et **en ce qu'**au moyen de liaisons d'entraînement (22; 25), les deux demi-arbres (21; 24) sont reliés à entraînement aux ensembles secondaires (23; 26) associés.

4. Véhicule automobile selon la revendication 3, **caractérisé en ce que** les deux demi-arbres (21; 24) sont maintenus à distance axiale mutuelle et **en ce qu'**un arbre de rotor (13) est disposé coaxialement à l'intérieur des deux demi-arbres (21; 24).

5. Véhicule automobile selon la revendication 4, **caractérisé en ce que** le disque de rotor (12) est relié à l'arbre de rotor (13) et est disposé axialement entre les deux demi-arbres (21; 24).

6. Véhicule automobile selon la revendication 1, **caractérisé en ce que** les deux embrayages d'embrayages doubles sont disposés radialement l'un au-dessus de l'autre, la sortie de l'embrayage radialement intérieur pouvant être reliée à un arbre central et la sortie de l'embrayage radialement extérieur pouvant être reliée à un arbre creux concentrique par rapport à l'arbre central et reprenant ce dernier, les deux ensembles secondaires (23; 26) étant disposés sur un seul côté de la machine électrique (9).

7. Véhicule automobile selon l'une des revendications 4 ou 5, **caractérisé en ce que** l'arbre de rotor (13) peut être accouplé au moteur (1) à combustion interne au moyen d'un premier embrayage commutable (6) et à une transmission de sortie disposée à la suite du moteur (1) à combustion interne dans le sens de l'entraînement au moyen d'un deuxième embrayage commutable (8).

8. Véhicule automobile selon l'une des revendications 1 à 7, **caractérisé en ce que** la puissance de la machine électrique (9) est dimensionnée de telle sorte qu'elle corresponde à la somme de la valeur maximale du besoin en puissance de l'un des deux ensembles secondaires (23; 26) et de la charge permanente de l'autre ensemble secondaire (23; 26).

9. Véhicule automobile selon l'une des revendications 1 à 8, **caractérisé en ce que** le dispositif de commande (28) comporte un circuit de priorité conçu pour empêcher que les deux ensembles secondaires (23; 26) soient accouplés simultanément à la machine électrique (9) au moyen de l'embrayage double (15).

10. Véhicule automobile selon la revendication 9, **caractérisé en ce que** le circuit de priorité du dispositif de commande (28) est conçu pour accoupler à la machine électrique (9) au moyen de l'embrayage double (15) d'abord l'ensemble secondaire (23; 26) qui se trouve dans une phase de démarrage dans le cas le plus défavorable.

11. Véhicule automobile selon la revendication 9, **caractérisé en ce que** le circuit de priorité du dispositif de commande (28) est conçu pour accoupler à la machine électrique (9) au moyen de l'embrayage double (15) d'abord l'ensemble secondaire (23; 26) qui a la priorité d'utilisation la plus élevée pour permettre un fonctionnement sans perturbation dans la situation de fonctionnement en cours.

12. Véhicule automobile selon l'une des revendications 1 à 11, **caractérisé en ce qu'**une machine électrique (9) peut être accouplée à chacun des deux ensembles secondaires (23; 26) sélectionnés dans le groupe formé d'un compresseur d'air, d'un compresseur de climatisation, d'une pompe hydraulique, d'une pompe à eau, d'un ventilateur, d'une pompe à huile moteur et d'une pompe à huile de transmission.
